# FASCICULE DE BREVET EUROPEEN

(11) **EP 1 533 620 B1**
(45) Date de publication et mention de la délivrance du brevet: **26.07.2006**
(21) Numéro de dépôt: 04292638.6
(22) Date de dépôt: 08.11.2004
(51) Int. Cl.: G01P 3/44, B60C 23/04, B60C 23/06

(54) **Système et procédé de determination d'au moins un paramètre d'au moins un organe tournant au moyen d'un signal de position absolue**
Vorrichtung und Verfahren zur Bestimmung mindestens eines Parameters wenigstens eines drehenden Teiles mittels eines Absolutpositionssignals
System and method for determining at least one parameter of at least one rotating unit using an absolute position signal

(30) Priorité: 21.11.2003 FR 0350880
(43) Date de publication de la demande: 25.05.2005
(73) Titulaire: SNR ROULEMENTS, F-74010 Annecy Cedex (FR)
(72) Inventeur: Nicot, Christophe, 74600 Quintal (FR); Duret, Christophe, 74600 Quintal (FR)
(74) Mandataire: Geismar, Thierry

(56) Documents cités:
- WO-A-99/52722
- DE-A- 4 133 999
- FR-A- 2 832 531
- US-A- 5 898 301

## Description

L'invention concerne un système de détermination d'au moins un paramètre d'au moins un organe tournant par rapport à une structure fixe, un procédé de détermination d'au moins un tel paramètre ainsi qu'un véhicule automobile comprenant un tel système.

L'invention s'applique typiquement à la détermination d'au moins un paramètre, tel que la pression, la température, la déformation, l'usure, d'un pneu de véhicule automobile.

Pour ce faire, il est connu d'utiliser pour chaque pneu :
- un transpondeur qui est solidaire en rotation du pneu, ledit transpondeur étant apte à mesurer le ou les paramètre(s) ; et
- un dispositif de détection du ou des paramètre(s) issu(s) du transpondeur, ledit dispositif étant solidaire du châssis du véhicule et comprenant une antenne apte à émettre un signal d'excitation au transpondeur et à recevoir la ou les mesure(s).

Pour permettre la communication entre le transpondeur et le dispositif de détection, l'antenne de ce dernier est positionnée à proximité de la zone de déplacement du transpondeur, typiquement dans le passage de roue.

Ainsi, en activant le dispositif de détection, il est possible d'obtenir périodiquement la valeur du ou des paramètre(s) mesuré(s) par le transpondeur et de rendre disponible cette valeur à un système, par exemple de sécurité du véhicule, qui la contrôle et/ou l'utilise.

Un problème qui se pose concerne l'établissement d'une procédure d'activation du dispositif de détection qui permette d'obtenir une communication satisfaisante entre ledit dispositif et le transpondeur. En effet, l'antenne présentant un cône d'émission/réception donné, l'activation doit être réalisée lorsque le transpondeur se trouve dans ce cône.

Selon une première solution, on a proposé d'activer le dispositif de détection en continu, mais celle-ci présente plusieurs inconvénients. Tout d'abord, elle induit une consommation électrique importante, et en partie inutile lorsque le transpondeur ne se trouve pas dans le cône d'émission/réception. En outre, elle sollicite le transpondeur à chaque rotation, ce qui, dans certaines conditions de roulage, est inutile et, dans le cas d'un transpondeur actif, consomme l'énergie de sa batterie inutilement.

Pour tenter de limiter la consommation électrique, on a proposé selon une deuxième solution d'activer à fréquence fixe le dispositif de détection. Mais cette solution présente également plusieurs inconvénients. Tout d'abord, elle ne permet pas d'assurer que le transpondeur soit dans le cône d'émission/réception lorsque le dispositif de détection est activé. En particulier, pour une fréquence d'activation donnée, il existe des vitesses de rotation du transpondeur pour lesquelles cette condition n'est pas remplie, ce qui est incompatible avec une utilisation du ou des paramètre(s) dans une fonction de sécurité du véhicule. En outre, cette solution ne permet pas de garantir une détermination du ou des paramètre(s) à fréquence donnée, par exemple en fonction de conditions de fonctionnement du véhicule.

Pour tenter de résoudre les inconvénients de cette deuxième solution, on a proposé d'augmenter la taille de l'antenne, de sorte à augmenter le cône d'émission/réception correspondant. Mais, outre que cette possibilité ne peut que limiter ces inconvénients sans les résoudre complètement puisque qu'une zone d'ombre dans la communication est toujours présente, l'augmentation de la taille de l'antenne induit des contraintes d'intégration accrues dans le passage de roue ainsi qu'une puissance et donc une consommation électrique plus importante.

Pour résoudre l'ensemble de ces inconvénients, l'invention propose notamment un système de détermination qui permette de synchroniser la communication entre l'antenne et le transpondeur lorsque celui-ci est dans le cône d'émission/réception, de sorte à sécuriser la communication en optimisant la consommation électrique, et ce tout en pouvant adapter la fréquence de communication à des conditions de fonctionnement du véhicule.

A cet effet, et selon un premier aspect, l'invention propose un système de détermination d'au moins un paramètre d'au moins un organe tournant par rapport à une structure fixe, ledit système comprenant, pour chaque organe tournant, un ensemble comprenant :
- un transpondeur solidaire en rotation de l'organe tournant, ledit transpondeur étant apte à mesurer le ou les paramètre(s) à déterminer ;
- un codeur solidaire en rotation de l'organe tournant, ledit codeur comprenant une piste principale et une piste top tour, ladite piste top tour comprenant une singularité de référence dont la position angulaire est indexée par rapport à la position angulaire du transpondeur sur l'organe tournant ;
- un capteur solidaire de la structure fixe, ledit capteur étant disposé en regard et à distance de lecture du codeur, ledit capteur comprenant un circuit électronique apte à délivrer un signal représentatif de la position angulaire du codeur par rapport à la structure fixe et un signal top tour comprenant une impulsion de référence correspondant à la détection de la singularité de référence, ledit circuit comprenant en outre des moyens de recalage du signal de position du codeur par rapport à la position de la singularité de sorte à délivrer un signal de position absolue dudit codeur par rapport à la singularité ;
- un dispositif de détection du ou des paramètre(s) issu(s) du transpondeur, ledit dispositif étant solidaire de la structure fixe et comprenant un moyen de communication apte à émettre un signal d'excitation au transpondeur et à recevoir la ou les mesure(s) ;
ledit système comprenant en outre :
- un dispositif d'activation qui est connecté à chaque capteur et à chaque dispositif de détection, ledit dispositif d'activation étant apte, en fonction de la position absolue du codeur, à activer le dispositif de détection d'un ensemble lorsque le transpondeur de l'ensemble est dans le cône d'émission/réception du moyen de communication dudit dispositif de détection.

Selon un deuxième aspect, l'invention propose un procédé de détermination d'au moins un paramètre d'au moins un organe tournant par rapport à une structure fixe au moyen d'un tel système, dans lequel le dispositif d'activation compare la position absolue du codeur à une position d'activation et, lorsque les deux positions sont égales, ledit dispositif active ou autorise l'activation du dispositif de détection.

Selon un troisième aspect, l'invention propose un véhicule automobile comprenant un tel système, chaque ensemble étant disposé de sorte à déterminer au moins un paramètre d'un pneu dudit véhicule.

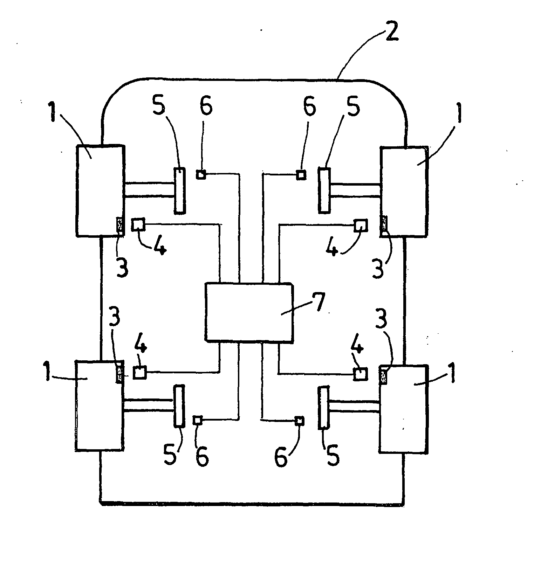

D'autres objets et avantages de l'invention apparaîtront au cours de la description qui suit, faite en référence au dessin annexé qui représente de façon schématique un véhicule comprenant un système de détermination selon l'invention.

L'invention concerne un système de détermination d'au moins un paramètre d'au moins un organe tournant 1 en rotation par rapport à une structure fixe 2. Selon le mode de réalisation décrit en relation avec la figure, ce système est destiné à la détermination d'au moins un paramètre d'au moins un pneu 1 d'un véhicule automobile. En particulier, le système permet la détermination de la pression, de la température, de la déformation et/ou de l'usure de tous les pneus 1 du véhicule.

Pour ce faire, le système comprend, pour chaque pneu 1, un ensemble comprenant un transpondeur 3 apte à mesurer le ou les paramètre(s) à déterminer, et un dispositif de détection 4 du ou des paramètre(s) issu(s) du transpondeur 3. Le transpondeur 3 est solidaire en rotation du pneu 1 et le dispositif de détection 4 est solidaire, au voisinage du transpondeur 3, du châssis 2 du véhicule. Selon d'autres applications, le transpondeur 3 peut être solidaire de la roue ou du roulement sur lequel la roue est montée.

Le système de détermination permet, en activant le dispositif de détection 4, d'obtenir périodiquement la valeur du ou des paramètre(s) mesuré(s) par le transpondeur 3 et de rendre disponible cette valeur à un système fixe par rapport au châssis 2, par exemple de sécurité du véhicule, qui la contrôle et/ou l'utilise. En particulier, la détermination automatique du ou des paramètre(s) peut permettre d'avertir le conducteur en cas d'anomalie. En outre, le ou les paramètre(s) peuvent être utilisés dans des systèmes d'aide à la conduite tels que l'anti-blocage des roues (ABS), le contrôle de la trajectoire (ESP) ou l'assistance électrique de la direction (DAE), de sorte à adapter l'action de ces systèmes en fonction de la valeur des paramètres déterminés.

Un ensemble transpondeur 3 - dispositif de détection 4 est connu de l'art antérieur :
- le dispositif de détection 4 comprenant un moyen de communication, par exemple sous la forme d'une antenne directionnelle, apte à émettre un signal d'excitation, par exemple RF, au transpondeur 3 et à recevoir la ou les mesure(s) ; et
- le transpondeur 3 pouvant être de type actif ou de type passif suivant qu'il est alimenté par une batterie propre afin d'effectuer la mesure et la communication ou que ces fonctions sont induites par le signal d'excitation issu du dispositif de détection 4. Pour la détermination de la pression du pneu 1, le transpondeur 3 peut être du type à ondes acoustiques de surface (SAW).

Dans le véhicule suivant l'invention, l'antenne est logée dans le passage de la roue sur laquelle est monté le pneu 1 et le transpondeur 3 est logé dans la valve du pneu 1. Ainsi la distance antenne - transpondeur 3 est réduite, ce qui permet d'optimiser la puissance électrique nécessaire à la communication des mesures entre le pneu 1 et le châssis 2. En variante, on peut également prévoir que le transpondeur 3 soit disposé dans la bande de roulement du pneu 1, notamment pour mesurer la déformation et l'usure de celui-ci.

L'ensemble comprend en outre un codeur 5 solidaire en rotation du pneu 1 et un capteur 6 solidaire du châssis 2 du véhicule. En particulier, le codeur 5 et/ou le capteur 6 peuvent être disposés au niveau du roulement de la roue tel que cela est par exemple décrit dans le document FR-2 700 588 issu de la demanderesse. Le codeur 5 peut en particulier être solidarisé en rotation à la bague tournante du roulement et le capteur 6 peut être associé à la bague fixe ou dissocié de celle-ci, pour être en regard et à distance de lecture du codeur 5.

Le codeur 5 a pour fonction de délivrer une information de position angulaire du pneu 1 et une information de position angulaire de référence. A cet effet, le codeur 5 comprend une piste principale et une piste top tour, ladite piste top tour comprenant une singularité de référence qui, comme on le verra dans la suite de la description, est indexée par rapport à la position angulaire du transpondeur 3 sur le pneu 1.

Suivant une réalisation, le codeur 5 est formé d'un anneau magnétique comprenant sur sa surface la piste principale et la piste top tour qui sont concentriques, lesdites pistes comprenant une succession de pôles Nord et Sud, la singularité de référence étant réalisée par une transition magnétique qui est différente des autres.

En regard et à distance de lecture de ce codeur 5, est prévu le capteur 6 qui comprend un circuit électronique apte à délivrer un signal représentatif de la position angulaire du codeur 5 par rapport au châssis 2 et un signal top tour comprenant une impulsion de référence correspondant à la détection de la singularité de référence. En outre, le circuit électronique comprend des moyens de recalage du signal de position du codeur 5 par rapport à la position de la singularité, de sorte à délivrer un signal de position absolue dudit codeur 5 par rapport à la singularité, et donc un signal de position absolue du pneu 1 puisque le codeur 5 est solidaire en rotation de celui-ci.

Suivant une réalisation, le capteur 6 comprend au moins trois éléments sensibles dont au moins deux sont positionnés en regard de la piste principale et au moins un est positionné en regard de la piste top tour.

Dans un exemple particulier, les éléments sensibles sont choisis dans le groupe comprenant les sondes à effet Hall, les magnétorésistances, les magnétorésistances géantes.

Le capteur 6 utilisé dans cette réalisation est apte à délivrer deux signaux électriques S1, S2 périodiques en quadrature par l'intermédiaire des éléments sensibles disposés en regard de la piste principale et un signal électrique S3 par l'intermédiaire des éléments sensibles disposés en regard de la piste top tour.

Le principe d'obtention des signaux S1 et S2 à partir d'une pluralité d'éléments sensibles alignés est par exemple décrit dans le document FR-2 792 403 issu de la demanderesse.

Mais des capteurs comprenant deux éléments sensibles qui sont aptes à délivrer les signaux S1 et S2 sont également connus.

A partir des signaux S1, S2 et S3, le circuit électronique est apte à délivrer des signaux digitaux de position A, B carrés en quadrature et un signal top tour C. Les signaux A, B étant représentatifs de la position angulaire du codeur mais également de sa vitesse de rotation ainsi que de son sens de rotation.

Un principe d'obtention des signaux digitaux A, B et C, ainsi que différents modes de réalisation des singularités magnétiques, sont décrits dans les documents FR-2 769 088 et EP-0 871 014.

Suivant une réalisation, le circuit électronique comprend en outre un interpolateur, par exemple du type décrit dans le document FR-2 754 063 issu de la demanderesse, permettant d'augmenter la résolution des signaux de sortie. En particulier, une résolution de la position angulaire du codeur 5 inférieure à 1° peut être obtenue.

Le capteur 6 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 5 peut être formé d'une cible en métal ou en verre sur laquelle les pistes principale et top tour ont été gravées de sorte à former un motif optique analogue au motif magnétique multipolaire exposé ci-dessus, les éléments sensibles étant alors formés de détecteurs optiques.

Le circuit électronique comprend des moyens de comptage aptes à déterminer, à partir d'une position initiale, les variations de la position angulaire du codeur 5. Dans un exemple de réalisation, les moyens de comptage comprennent un registre dans lequel la valeur de la position angulaire est incrémentée ou décrémentée d'une valeur angulaire correspondant au nombre de fronts des signaux A et B qui sont détectés, la valeur initiale étant par exemple fixée à zéro lors de la mise en service du système. Ainsi, le dispositif de traitement permet de connaître la position relative du codeur 5 par rapport à la position initiale.

Ensuite, dès l'enregistrement de l'impulsion de référence du signal top tour, le circuit électronique permet de recaler le signal de position angulaire relative du codeur 5 de sorte à obtenir ultérieurement et en continu, grâce aux moyens de comptage, le signal de position angulaire absolue du codeur 5 par rapport à la position de la singularité.

Outre le ou les ensemble(s), le système comprend un dispositif d'activation 7, sous la forme d'une unité de calcul, qui est connecté à chaque capteur 6 et à chaque dispositif de détection 4, de sorte à pouvoir d'une part utiliser le signal de position absolue et d'autre part activer chaque dispositif de détection 4 pour recueillir la valeur du ou des paramètre(s) détecté(s). Suivant l'invention, le dispositif d'activation 7 est apte, en fonction de la position absolue du codeur, à activer le dispositif de détection 4 d'un ensemble lorsque le transpondeur 3 de l'ensemble est dans le cône d'émission/réception de l'antenne dudit dispositif de détection.

Le dispositif d'activation 7 permet de synchroniser le passage du transpondeur 3 dans le cône avec l'activation du dispositif de détection 4. En effet, la position de la singularité étant indexée par rapport à celle du transpondeur 3, il existe un décalage connu et constant entre le signal de position absolue et la position du transpondeur 3. La plage angulaire du cône d'émission/réception de l'antenne étant connu, ce décalage est utilisé par le dispositif d'activation 7 pour déterminer une position d'activation dans laquelle le transpondeur 3 est dans ledit cône. En particulier, le système selon l'invention permet, grâce à la synchronisation, d'optimiser la durée de vie de la batterie alimentant le dispositif d'activation 7 et, le cas échéant, de la batterie alimentant le transpondeur 3 dans le cas où celui-ci est actif.

Selon une réalisation, chaque codeur 5 comprend des moyens de codage de l'impulsion qui sont différents d'un codeur 5 à l'autre, le dispositif d'activation 7 comprenant des moyens d'identification du codage de sorte à activer le dispositif de détection 4 de l'ensemble du codeur 5 dont est issue l'impulsion. Cette réalisation peut permettre de simplifier le câblage entre les ensembles et le dispositif d'activation 7, puisque la reconnaissance du pneu 1 concerné ne dépend plus de l'adressage physique des signaux de position au dispositif d'activation 7. En particulier, suivant cette réalisation, on peut prévoir une liaison multiplexée ou sans fil entre les ensembles et le dispositif d'activation 7. Par ailleurs, cette réalisation permet d'identifier électroniquement la roue dont sont issus le ou les paramètre(s).

Dans un exemple de réalisation, les moyens de codage comprennent un nombre de singularités supplémentaires qui sont réparties sur la codeur 5.

Dans un procédé de détermination utilisant un système suivant l'invention, le dispositif d'activation 7 compare la position absolue du codeur 5 à la position d'activation déterminée et, lorsque les deux positions sont égales, le dispositif active ou autorise l'activation du dispositif de détection 4 de sorte à permettre la détection du ou des paramètre(s).

Lorsque le dispositif d'activation 7 autorise l'activation, il peut être prévu de réaliser ladite activation à des périodes d'interrogation variables qui sont déterminées en fonction des conditions de fonctionnement du pneu 1. En particulier, ces conditions peuvent être fonction du ou des paramètre(s) mesuré(s) (pression, température), des conditions de roulage du véhicule telles que la vitesse ou l'état de la chaussée (condition de pluie ou de neige par exemple), du positionnement du pneu 1 (avant ou arrière).

Dans un exemple de réalisation, on peut définir au moins un seuil de vitesse pour le véhicule de sorte que :
- en dessous du seuil, l'activation soit réalisée à une fréquence fᵢ ;
- au dessus du seuil, l'activation soit réalisée à une fréquence multiple de fᵢ.

On peut également décider de déterminer la pression des pneus 1 arrières plus fréquemment que celle des pneus avants.

Pour ce faire, le dispositif d'activation 7 est également alimenté avec les paramètres pertinents et avec les conditions souhaitées, ledit dispositif comprenant des moyens de temporisation de l'activation lorsque celle-ci est autorisée.

Suivant une réalisation du procédé de détermination, la position d'activation utilisée peut être égale à la position indexée du transpondeur 3 par rapport à la singularité de référence.

Suivant une autre réalisation, on peut prévoir, après éventuellement utilisation initiale de la position indexée en tant que position d'activation, une procédure itérative d'optimisation de la position d'activation, ladite procédure pouvant être déclenchée en continu ou de façon périodique.

La procédure d'optimisation peut prévoir d'analyser la qualité du signal issu du dispositif de détection 4, par exemple son rapport signal sur bruit, le taux d'erreur de communication, la puissance communiquée. Si cette qualité est inférieure à un premier seuil, incrémenter et/ou décrémenter d'un pas donné, par exemple d'un degré, la position d'activation. De façon itérative, la procédure permet, en analysant la qualité du signal correspondant, d'incrémenter ou de décrémenter la position d'activation pour obtenir une position d'activation optimisée dans laquelle la qualité du signal est maximale. Cette position optimisée est utilisée ultérieurement en tant que nouvelle position d'activation.

On décrit ci-dessous, des réalisations possibles de l'indexation du transpondeur 3 par rapport à la singularité de référence, de sorte que l'activation ou l'autorisation de l'activation du dispositif de détection 4 soit réalisée lorsque la position absolue du codeur est égale à une positon d'activation mémorisée.

Selon une première réalisation, la position indexée du transpondeur 3 par rapport à la singularité de référence est préalablement mémorisée dans le dispositif d'activation 7. Par exemple cette indexation est réalisée mécaniquement en usine ou dans un atelier, sur un banc apte à mesurer le décalage angulaire entre la singularité de référence et le transpondeur 3.

Selon une variante de cette réalisation, la singularité de référence est indexée par rapport à toutes les positions angulaires possibles du transpondeur 3 sur le pneu 1, ces positions correspondant chacune à une position de montage possible de la roue sur le véhicule.

Dans cette réalisation, le dispositif d'activation 7 est apte à activer le dispositif de détection 4 lorsque chaque position angulaire possible du transpondeur 3 est dans le cône d'émission/réception de l'antenne. Ainsi, par exemple pour quatre positions possibles, le dispositif de détection 4 sera activé quatre fois, la communication étant réalisée de façon satisfaisante uniquement dans l'une de ces positions.

Cette réalisation permet, en cas de montage/démontage de la roue, de ne pas avoir à refaire l'indexation.

Selon une deuxième réalisation, le procédé de détermination comprend une procédure préalable d'indexation de la position de la singularité de référence par rapport à la position angulaire du transpondeur 3.

Cette procédure peut être réalisée par activation à fréquence fixe, par exemple toutes les secondes, du dispositif de détection 4 et, lorsque le signal mesuré par le dispositif de détection 4 est satisfaisant, détermination et enregistrement dans le dispositif d'activation 7 de la position indexée qui est égale à la position absolue du codeur 5. De même que dans la procédure d'optimisation, la qualité du signal est analysée pour juger s'il est satisfaisant.

En particulier, cette procédure peut être déclenchée à chaque mise en service du système de détermination, avant la détermination du ou des paramètre(s) suivant l'invention.

Suivant une réalisation du procédé, un deuxième seuil de qualité du signal, inférieur au premier, est utilisé dans le dispositif d'activation 7. On peut ainsi prévoir, si la qualité du signal est inférieure au deuxième seuil, de déclencher la procédure d'indexation à la place de la procédure d'optimisation. En particulier, cette réalisation permet, en cas de coupure d'alimentation électrique du système lors de la détermination du ou des paramètre(s), de lancer une procédure d'indexation pour recaler la synchronisation. En outre, si la procédure d'optimisation ne permet pas de converger vers une position optimisée, cette réalisation permet également de lancer une procédure d'indexation en cours d'optimisation.

## Revendications

1. Système de détermination d'au moins un paramètre d'au moins un organe tournant (1) par rapport à une structure fixe (2), ledit système comprenant, pour chaque organe tournant (1), un ensemble comprenant :
- un transpondeur (3) solidaire en rotation de l'organe tournant (1), ledit transpondeur étant apte à mesurer le ou les paramètre(s) à déterminer ;
- un codeur (5) solidaire en rotation de l'organe tournant (1), ledit codeur comprenant une piste principale et une piste top tour, ladite piste top tour comprenant une singularité de référence dont la position angulaire est indexée par rapport à la position angulaire du transpondeur (3) sur l'organe tournant (1) ;
- un capteur (6) solidaire de la structure fixe (2), ledit capteur étant disposé en regard et à distance de lecture du codeur (5), ledit capteur comprenant un circuit électronique apte à délivrer un signal représentatif de la position angulaire du codeur (5) par rapport à la structure fixe (2) et un signal top tour comprenant une impulsion de référence correspondant à la détection de la singularité de référence, ledit circuit comprenant en outre des moyens de recalage du signal de position du codeur par rapport à la position de la singularité de sorte à délivrer un signal de position absolue dudit codeur (5) par rapport à la singularité ;
- un dispositif de détection (4) du ou des paramètre(s) issu(s) du transpondeur (3), ledit dispositif étant solidaire de la structure fixe (2) et comprenant un moyen de communication apte à émettre un signal d'excitation au transpondeur (3) et à recevoir la ou les mesure(s) ;
ledit système comprenant en outre :
- un dispositif d'activation (7) qui est connecté à chaque capteur (6) et à chaque dispositif de détection (4), ledit dispositif d'activation étant apte, en fonction de la position absolue du codeur, à activer le dispositif de détection (4) d'un ensemble lorsque le transpondeur (3) de l'ensemble est dans le cône d'émission/réception du moyen de communication dudit dispositif de détection.

2. Système selon la revendication 1, **caractérisé en ce que** le codeur (5) est formé d'un anneau magnétique comprenant sur sa surface la piste principale et la piste top tour qui sont concentriques, lesdites pistes comprenant une succession de pôles Nord et Sud, la singularité de référence étant réalisée par une transition magnétique qui est différente des autres.

3. Système selon la revendications 1 ou 2, **caractérisé en ce que** la singularité de référence est indexée par rapport à toutes les positions angulaires possibles du transpondeur (3) sur l'organe tournant (1), le dispositif d'activation (7) étant apte à activer le dispositif de détection (4) lorsque chaque position angulaire possible du transpondeur (3) est dans le cône d'émission/réception du moyen de communication.

4. Système selon l'une quelconque des revendications 1 à 3, **caractérisé en ce que** chaque codeur (5) comprend en outre des moyens de codage de l'impulsion qui sont différents d'un codeur (5) à l'autre, le dispositif d'activation (7) comprenant des moyens d'identification du codage de sorte à activer le dispositif de détection (4) de l'ensemble du codeur (5) dont est issue l'impulsion.

5. Système selon la revendication 4, **caractérisé en ce que** les moyens de codage comprennent un nombre de singularités supplémentaires qui sont réparties sur le codeur (5).

6. Procédé de détermination d'au moins un paramètre d'au moins un organe tournant (1) par rapport à une structure fixe (2) au moyen d'un système selon la revendication 1 ou 2, dans lequel le dispositif d'activation (7) compare la position absolue du codeur (5) à une position d'activation et, lorsque que les deux positions sont égales, ledit dispositif active ou autorise l'activation du dispositif de détection (4).

7. Procédé selon la revendication 6, **caractérisé en ce que** la position d'activation est égale, au moins initialement, à la position indexée du transpondeur (3) par rapport à la singularité de référence.

8. Procédé selon la revendication 6 ou 7, **caractérisé en ce qu'**il comprend une procédure itérative d'optimisation de la position d'activation dans laquelle la qualité du signal issu du dispositif de détection (4) est analysée, et, si la qualité est inférieure à un premier seuil, la position d'activation est incrémentée et/ou décrémentée d'un pas donné pour déterminer une nouvelle position optimisée qui est utilisée ultérieurement par le dispositif d'activation (7) en tant que nouvelle position d'activation.

9. Procédé selon l'une quelconque des revendications 6 à 8, **caractérisé en ce que**, lorsque le dispositif d'activation (7) autorise l'activation, celle-ci est réalisée à des périodes d'interrogation variables qui sont déterminées en fonction de conditions de fonctionnement de l'organe tournant (1).

10. Procédé selon l'une quelconque des revendications 6 à 9, **caractérisé en ce que** la position indexée du transpondeur (3) par rapport à la singularité de référence est préalablement mémorisée dans le dispositif d'activation (7).

11. Procédé selon l'une quelconque des revendications 6 à 9, **caractérisé en ce qu'**il comprend une procédure préalable d'indexation de la position de la singularité de référence par rapport à la position angulaire du transpondeur (3) sur l'organe tournant (1).

12. Procédé selon la revendication 11, **caractérisé en ce que** la procédure d'indexation est réalisée par activation à fréquence fixe du dispositif de détection (4), et, lorsque le signal mesuré par ledit dispositif est satisfaisant, détermination de la position indexée qui est égale à la position absolue du codeur (5).

13. Procédé selon la revendication 11 ou 12 lorsqu'elle dépend de la revendication 8, dans lequel, si la qualité du signal est inférieure à un deuxième seuil qui est inférieur au premier seuil, la procédure d'indexation est réalisée à la place de la procédure d'optimisation.

14. Véhicule automobile comprenant un système selon l'une quelconque des revendications 1 à 5, chaque ensemble étant disposé de sorte à déterminer au moins un paramètre d'un pneu (1) dudit véhicule.

15. Véhicule selon la revendication 14, **caractérisé en ce que** le moyen de communication est logé dans le passage de la roue sur laquelle est monté le pneu (1) et **en ce que** le transpondeur (3) est logé dans la valve du pneu (1).

## Claims

1. System for determining at least one parameter of at least one member (1) rotating in relation to a fixed structure (2), said system comprising, for each rotating member (1) an assembly consisting of:
- a transponder (3) solidly attached in rotation to the rotating member (1), said transponder being able to measure the parameter or parameters to be defined;
- an encoder (5) solidly attached in rotation to the rotating member (1), said encoder comprising a main track and a top turn track, said top turn track comprising a reference singularity, the angular position of which is indexed in relation to the angular position of the transponder (3) on the rotating member (1);
- a sensor (6) solidly attached to the fixed structure (2), said sensor being disposed opposite to and at a reading distance from the encoder (5), said sensor comprising an electronic circuit that is able to deliver a signal representing the angular position of the encoder (5) in relation to the fixed structure (2) and a top turn signal comprising a reference pulse that corresponds to the detection of the reference singularity, said circuit also comprising means for resetting the position signal of the encoder in relation to the singularity position in order to deliver an absolute position signal of said encoder (5) in relation to the singularity;
- a device (4) for detecting the parameter or parameters issuing from the transponder (3), said device being solidly attached to the fixed structure (2) and comprising communication means that can emit a signal to excite the transponder (3) and receive the measurement or measurements:
said system also comprising:
- an activation device (7) which is connected to each sensor (6) and to each detection device (4), said activation device being able, according to the absolute position of the encoder, to activate the detection device (4) of an assembly when the transponder (3) of the assembly is in the transmission/reception cone of the communication means of said detection device.

2. System according to claim 1, **characterised in that** the encoder (5) consists of a magnetic ring comprising on its surface the main track and the top turn track, which are concentric, said tracks comprising a succession of north and south poles, the reference singularity being provided by a magnetic transition that is different from the others.

3. System according to claims 1 or 2, **characterised in that** the reference singularity is indexed with respect to all the possible angular positions of the transponder (3) on the rotating member (1), the activation device (7) being able to activate the detection device (4) when each possible angular position of the transponder (3) is in the transmission/reception cone of the communication means.

4. System according to any one of the claims from 1 to 3, **characterised in that** each encoder (5) also comprises means for encoding the pulse which are different from one encoder (5) to another, the activation device (7) comprising means for identifying the encoding so as to activate the detection device (4) of the coder assembly (5) issuing the pulse.

5. System according to claim 4, **characterised in that** the encoding means comprise a number of additional singularities which are distributed over the encoder (5).

6. Method of determining at least one parameter of at least one member (1) rotating in relation to a fixed structure (2) by means of a system according to claim 1 or 2, in which the activation device (7) compares the absolute position of the encoder (5) with an activation position and, when the two positions match, said device activates or enables the activation of the detection device (4).

7. Method according to claim 6, **characterised in that** the activation position is the same, at least initially, as the indexed position of the transponder (3) in relation to the reference singularity.

8. Method according to claim 6 or 7, **characterised in that** it comprises an iterative process of optimising the activation position in which the quality of the signal issuing from the detection device (4) is analysed and, if the quality is below a first threshold, the activation position is incremented and/or decremented by a given step in order to determine a new optimised position which is subsequently used by the activation device (7) as a new activation position.

9. Method according to any one of the claims from 6 to 8, **characterised in that**, when the activation device (7) enables activation, it is carried out at variable interrogation periods which are determined according to the operating conditions of the rotating member (1).

10. Method according to any one of the claims from 6 to 9, **characterised in that** the indexed position of the transponder (3) in relation to the reference singularity is previously stored in the activation device (7).

11. Method according to any one of the claims from 6 to 9, **characterised in that** it comprises a prior process of indexing the position of the reference singularity in relation to the angular position of the transponder (3) on the rotating member (1).

12. Method according to claim 11, **characterised in that** the indexing process is carried out by activation of the detection device (4) at a fixed frequency and, when the signal measured by said device is satisfactory, determination of the indexed position that is equal to the absolute position of the encoder (5).

13. Method according to claim 11 or 12, when it depends on claim 8, in which, if the quality of the signal is below a second threshold which is lower than the first threshold, the indexing process is carried out in place of the optimisation process.

14. Motor vehicle comprising a system according to any one of the claims from 1 to 5, each assembly being arranged so as to determine at least one parameter of a tyre (1) of said vehicle.

15. Vehicle according to claim 14, **characterised in that** the communication means are housed in the arch of the wheel on which the tyre (1) is mounted and **in that** the transponder (3) is housed in the valve of the tyre (1).

## Patentansprüche

1. System zur Bestimmung mindestens eines Parameters mindestens eines Drehorgans (1), das gegenüber einer feststehenden Struktur (2) dreht, wobei das besagte System für jedes Drehorgan (1) ein Aggregat umfaßt, das folgende Teile umfaßt:
- Einen Transponder (3), der in Drehung fest mit dem Drehorgan (1) verbunden ist, wobei der besagte Transponder fähig ist, den oder die zu bestimmenden Parameter zu messen;
- Einen Codierer (5), der in Drehung fest mit dem Drehorgan (1) verbunden ist, wobei der besagte Codierer eine Hauptspur und eine Top Tour Spur umfaßt und die besagte Top Tour Spur eine Bezugssingularität aufweist, deren Winkelposition gegenüber der Winkelposition des Transponders (3) auf dem Drehorgan (1) indexiert ist;
- Einen Aufnehmer (6), der mit der feststehenden Struktur (2) fest verbunden ist, wobei der besagte Aufnehmer gegenüber und in Leseabstand des Codierers (5) angeordnet ist, wobei der besagte Aufnehmer einen elektronischen Schaltkreis umfaßt, der fähig ist, ein für die Winkelposition des Codierers (5) gegenüber der feststehenden Struktur (2) repräsentatives Signal auszugeben und ein Top Tour Signal, das einen Referenzimpuls umfaßt, der der Prüfung der Bezugssingularität entspricht, wobei der besagte Schaltkreis ferner Mittel zur Nachführung des Positionssignals des Codierers gegenüber der Position der Singularität umfaßt, so daß er ein Signal der absoluten Position des besagten Codierers (5) gegenüber der Singularität abgibt;
- Eine Vorrichtung zur Prüfung (4) des oder der aus dem Transponder (3) kommenden Parameter, wobei die besagte Vorrichtung mit der feststehenden Struktur (2) fest verbunden ist und ein Kommunikationsmittel umfaßt, das geeignet ist, ein Erregungssignal an den Transponder (3) auszugeben und den/die Meßwert/e zu erhalten;
Wobei das besagte System ferner umfaßt:
- Eine Aktivierungsvorrichtung (7), die an jeden Aufnehmer (6) und an jede Prüfvorrichtung (4) angeschlossen ist, wobei die besagte Aktivierungsvorrichtung geeignet ist, je nach der absoluten Position des Codierers die Prüfvorrichtung (4) eines Aggregats zu aktivieren, wenn der Transponder (3) des Aggregats sich im Sende-/Empfangskegel des Kommunikationsmittels der besagten Prüfvorrichtung befindet.

2. System nach Anspruch 1, **dadurch gekennzeichnet, daß** der Codierer (5) aus einem magnetischen Ring geformt ist, der auf seiner Oberfläche die Hauptspur und die Top Tour Spur aufweist, die konzentrisch sind, wobei die besagten Spuren eine Aufeinanderfolge von Nord- und Südpolen umfassen, wobei die Bezugssingularität durch einen magnetischen Übergang durchgeführt wird, der sich von den anderen unterscheidet.

3. System nach Anspruch 1 oder Anspruch 2, **dadurch gekennzeichnet, daß** die Bezugssingularität im Vergleich zu allen möglichen Winkelpositionen des Transponders (3) auf dem Drehorgan (1) indexiert ist, wobei die Aktivierungsvorrichtung (7) fähig ist, die Prüfvorrichtung (4) zu aktivieren, wenn jede mögliche Winkelposition des Transponders (3) im Sende-/Empfangskegel des Kommunikationsmittels ist.

4. System nach einem beliebigen der Ansprüche 1 bis 3, **dadurch gekennzeichnet, daß** jeder Codierer (5) ferner Mittel zur Codierung des Impulses umfaßt, die je nach Codierer (5) unterschiedlich sind, wobei die Aktivierungsvorrichtung (7) Mittel zur Identifizierung der Codierung umfaßt, damit die Prüfvorrichtung (4) des gesamten Codierers (5) aktiviert wird, von dem der Impuls ausgegangen ist.

5. System nach Anspruch 4, **dadurch gekennzeichnet, daß** die Codiermittel eine Reihe zusätzlicher Singularitäten umfassen, die auf den Codierer (5) verteilt sind.

6. Verfahren zur Bestimmung mindestens eines Parameters mindestens eines Drehorgans (1) gegenüber einer feststehenden Struktur (2), vermittels eines Systems nach Anspruch 1 oder Anspruch 2, bei dem die Aktivierungsvorrichtung (7) die absolute Position des Codierers (5) mit einer Aktivierungsposition vergleicht, und wenn die beiden Positionen gleich sind, aktiviert die besagte Vorrichtung die Prüfvorrichtung (4) oder genehmigt deren Aktivierung.

7. Verfahren nach Anspruch 6, **dadurch gekennzeichnet, daß** die Aktivierungsposition zumindest ursprünglich gleich der indexierten Position des Transponders (3) gegenüber der Bezugssingularität ist.

8. Verfahren nach Anspruch 6 oder Anspruch 7, **dadurch gekennzeichnet, daß** es ein wiederholendes Vorgehen der Optimierung der Aktivierungsposition umfaßt, in dem die Qualität des aus der Prüfvorrichtung (4) kommenden Signals analysiert wird, und wenn die Qualität unter einer ersten Schwelle liegt, die Aktivierungsposition um einen gegebenen Schritt aufwärts- und/oder abwärts gezählt wird, um eine neue optimierte Position zu bestimmen, die später von der Aktivierungsvorrichtung (7) als neue Aktivierungsposition benutzt wird.

9. Verfahren nach einem beliebigen der Ansprüche 6 bis 8, **dadurch gekennzeichnet, daß**, wenn die Aktivierungsvorrichtung (7) die Aktivierung erlaubt, diese in variablen Abfragezeiträumen durchgeführt wird, die je nach Betriebsbedingungen des Drehorgans (1) bestimmt werden.

10. Verfahren nach einem beliebigen der Ansprüche 6 bis 9, **dadurch gekennzeichnet, daß** die indexierte Position des Transponders (3) gegenüber der Bezugssingularität vorher in der Aktivierungsvorrichtung (7) gespeichert wird.

11. Verfahren nach einem beliebigen der Ansprüche 6 bis 9, **dadurch gekennzeichnet**, es ein Vorgehen der vorherigen Indexierung der Position der Bezugssingularität gegenüber der Winkelposition des Transponders (3) auf dem Drehorgan (1) umfaßt.

12. Verfahren nach Anspruch 11, **dadurch gekennzeichnet, daß** das Indexierungsverfahren durch Aktivierung bei Festfrequenz der Prüfvorrichtung (4) durchgeführt wird, und wenn das von der besagten Vorrichtung gemessene Signal zufriedenstellend ist, Bestimmung der indexierten Position, die gleich der absoluten Position des Codierers (5) ist.

13. Verfahren nach Anspruch 11 oder Anspruch 12, wenn er vom Anspruch 8 abhängt, in dem, wenn die Qualität des Signals unter einer zweiten Schwelle liegt, die unter der ersten Schwelle liegt, das Indexierungsvorgehen anstelle des Optimierungsverfahrens durchgeführt wird.

14. Kraftfahrzeug, das ein System nach einem beliebigen der Ansprüche 1 bis 5 umfaßt, wobei jedes Aggregat so angeordnet ist, daß zumindest ein Parameter eines Reifens (1) des besagten Fahrzeugs bestimmt wird.

15. Fahrzeug nach Anspruch 14, **dadurch gekennzeichnet, daß** das Kommunikationsmittel im Durchgang des Rades untergebracht ist, auf das der Reifen (1) montiert ist, und dadurch, daß der Transponder (3) im Ventil des Reifens (1) untergebracht ist.
